# EUROPÄISCHE PATENTSCHRIFT

(11) **EP 2 004 459 B1**
(45) Veröffentlichungstag und Bekanntmachung des Hinweises auf die Patenterteilung: **29.06.2011**
(21) Anmeldenummer: 07723976.2
(22) Anmeldetag: 04.04.2007
(51) Int. Cl.: B60T 7/10

(54) **HANDBREMSHEBEL**
HANDBRAKE LEVER
LEVIER DE FREIN A MAIN

(30) Priorität: 12.04.2006 DE 202006008700 U
(43) Veröffentlichungstag der Anmeldung: 24.12.2008
(73) Patentinhaber: AL-KO Kober AG, 89359 Kötz (DE)
(72) Erfinder: BECK, Gerhard, 89343 Jettingen-Scheppach (DE)
(74) Vertreter: Ernicke, Klaus Stefan
(86) Internationale Anmeldenummer: PCT/EP2007/003035
(87) Internationale Veröffentlichungsnummer: WO 2007/118612

(56) Entgegenhaltungen:
- EP-A1- 0 607 021
- DE-A1- 2 104 687
- DE-A1- 10 237 212
- JP-A- 11 175 178

## Beschreibung

Die Erfindung betrifft einen Handbremshebel für Bremseinrichtungen von Fahrzeuganhängern mit den Merkmalen im Oberbegriff des Hauptanspruchs.

Ein solcher Handbremshebel ist aus der DE 102 37 212 A1 und der DE 694 05 784 T2 bekannt. Der am Gehäuse einer Bremseinrichtung des Fahrzeuganhängers schwenkbar gelagerte Handbremshebel hat eine variable Länge und kann zwischen einer Betätigungsstellung und einer Lösestellung gedreht werden, wobei seine Länge in Lösestellung kleiner als in Betätigungsstellung ist. Der Handbremshebel besitzt ein teleskopierbares Griffteil mit einer veränderlichen Ausfahrlänge Δ1. Das Griffteil ist verschieblich auf einem Grundkörper des Handbremshebels gelagert und kann gegen die Kraft einer Rückstellfeder verschoben werden. Die tatsächlich eintretende Ausfahrlänge hängt von der Art der manuellen Betätigung ab. Um in der Betätigungsstellung eine maximale Ausfahrlänge Δl zu erreichen, muss das Griffteil gegen die Kraft der Rückstellfeder hochgezogen werden, was problematisch in der Handhabung und Ergonomie ist. Durch die Federbelastung ist auch die Ausfahrlänge Δl unbestimmt und hängt von der aufgewendeten Zugkraft des Bedieners ab.

Die JP 11-175178 A offenbart ein in der Länge verstellbares Bedienteil in aufrechter Stellung und für unbekannte Zwecke, dessen oberes Griffstück gegenüber einem Basisteil mittels einer Kulissenführung mit Führungs- und Sperrnuten verschoben werden kann. Bestimmend für die Bedienteillänge und deren Einstellung ist der Bediener, der das Griffteil gegenüber dem Basisteil manuell verschiebt.

Es ist Aufgabe der vorliegenden Erfindung, einen besseren Handbremshebel aufzuzeigen.

Die Erfindung löst diese Aufgabe mit den Merkmalen im Hauptanspruch.

Die Zwangsführung für das Griffteil hat den Vorteil, dass die Ausfahrlänge Δl gezielt beeinflusst und eingestellt werden kann. Eine spezielle manuelle Betätigung des Bedieners zum Ausziehen des Griffteils ist nicht erforderlich. Durch die Zwangsführung ist die Bedienung des Handbremshebels wesentlich einfacher, komfortabler und weniger kraftaufwändig. Der Handbremshebel lässt sich auch leichter bedienen.

Besonders günstig ist es, wenn die Zwangsführung die Ausfahrlänge Δl in Abhängigkeit von der Drehstellung des Handbremshebels steuert. Hierdurch ist eine optimale Kinematik sicher gestellt, ohne dass der Bediener unterstützend eingreifen muss. Der Handbremshebel kann automatisch in der Betätigungsstellung die maximale Länge bzw. Ausfahrlänge Δl einnehmen und in der Lösestellung die minimale Länge haben. Der Bediener braucht durch die Zwangsführung auch keine Einweisung zur Hebelbetätigung.

Die Zwangsführung kann unterschiedlich ausgebildet sein. Für die gewünschte Kinematik ist ein Lenkergetriebe vorteilhaft, welches z.B. nach dem in den Unteransprüchen beschriebenen Aus-führungs-beispiel konstruktiv ausgestaltet sein kann. Ein Lenkergetriebe zieht und schiebt das teleskopierbare Griffteil. Daneben gibt es andere Gestaltungsmöglichkeiten. Z.B. kann das teleskopierbare Griffteil unter der permanenten Einwirkung einer ausschiebenden Feder oder eines anderen Kraftelements stehen, wobei ein Seil an Stelle des Lenkergetriebes angeordnet ist und die Ausfahrlänge Δl in Abhängigkeit von der Drehstellung des Handbremshebels begrenzt.

Die variable Handbremshebellänge ist insbesondere in Verbindung mit einem Kraftspeicher der Bremseinrichtung des Fahrzeuganhängers vorteilhaft. Der Kraftspeicher ist für die Rückfahrautomatik in den Radbremsen des Fahrzeuganhängers nützlich und stellt einen zusätzlichen Spannweg zur Verfügung, falls sich der Fahrzeuganhänger aus der Handbremsstellung rückwärts bewegen sollte. Der Kraftspeicher unterstützt auch die Handkraft beim Betätigen des Handbremshebels. Zu diesem Zweck wird der Kraftspeicher vom Handbremshebel beim Rückschwenken in die Lösestellung gespannt. Beim Betätigen des Handbremshebels ist es von ergonomischen Vorteil, wenn die Handbremshebellänge bei der Betätigung zunimmt, wodurch das Moment vergrößert und die erforderliche Handbremskraft entsprechend verringert wird.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Bremseinrichtung an einem Fahrzeuganhänger mit einer Handbremseinrichtung und einem teleskopierbaren Handbremshebel mit einer Zwangsführung in Lösestellung und
- Figur 2:: die Anordnung von Figur 1 in Betätigungs- oder Spannstellung.

Die Erfindung betrifft einen Handbremshebel (14) für Bremseinrichtungen (4) von Fahrzeuganhängern (1). Darüber hinaus erstreckt sich die Erfindung auch auf Fahrzeuganhänger, die mit einer Bremseinrichtung (4) und einem solchen Handbremshebel (14) ausgerüstet sind.

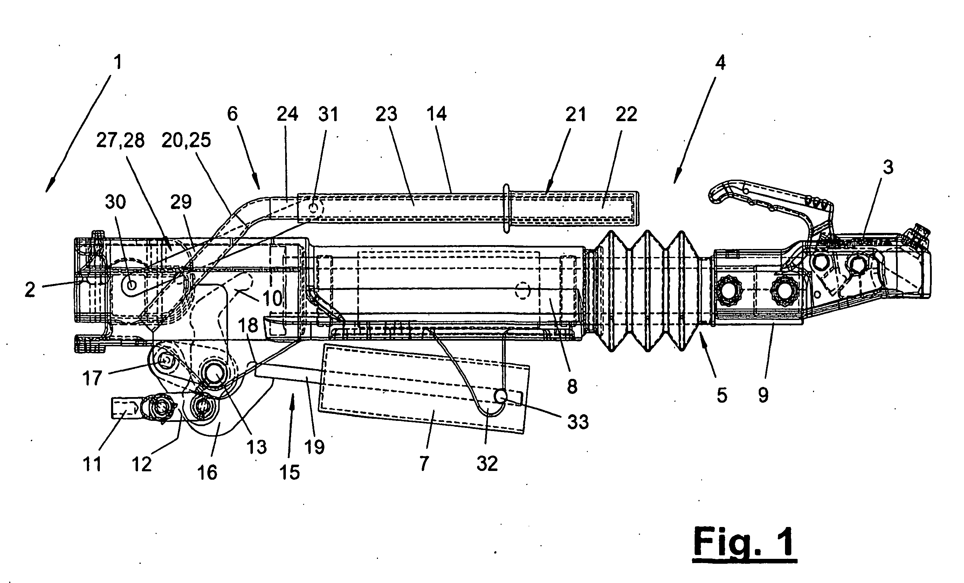

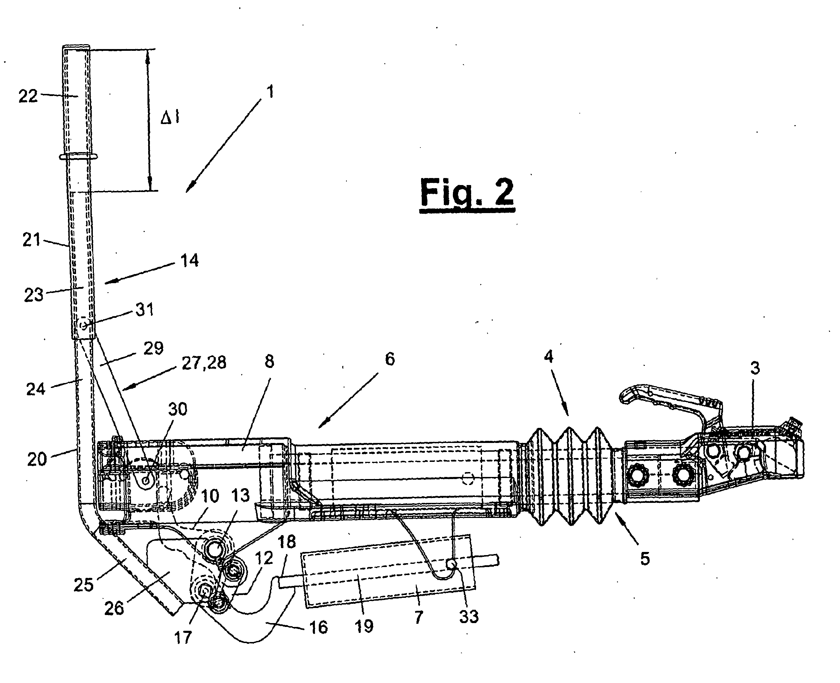

In Figur 1 und 2 ist der vordere Bereich eines Fahrzeuganhängers (1) und seine Deichsel (2) schematisch dargestellt. Der Fahrzeuganhänger (1) hat ein Fahrgestell oder Chassis mit ein oder zwei Achse und eine starre Deichsel (2), von der lediglich in den Zeichnungen der Deichselkopf andeutungsweise dargestellt ist. Die vorzugsweise starre Deichsel (2) kann in beliebiger Weise, z.B. als V-Deichsel oder als Rohrdeichsel ausgebildet sein. Am vorderen Deichselende ist eine Anhängerkupplung (3) mit einer Kupplungsmechanik angeordnet, mit der der Fahrzeuganhänger (1) mit einer Kugelkopfkupplung oder anders gearteten Kupplung an einem Zugfahrzeug verbunden werden kann.

Die Bremseinrichtung (4) des Fahrzeuganhängers (1) umfasst Radbremsen an den Rädern (nicht dargestellt), die über ein Bremsgestänge (11) betätigt werden können. Unter einem Bremsgestänge (11) wird ein beliebiges Betätigungsorgan verstanden, welches z.B. auch einen Seilzug, eine hydraulische Kraftübertragung oder dergleichen sein kann.

Die Bremseinrichtung (4) umfasst zumindest eine Handbremseinrichtung (6) mit einem schwenkbar gelagerten Handbremshebel (14), der auf das Bremsgestänge einwirken und die Radbremsen betätigen kann. Figur 1 zeigt den Handbremshebel (14) in einer abgeschwenkten Lösestellung, in der es sich im wesentlichen längs der Deichsel (2) erstreckt. Figur 2 zeigt die Betätigung- oder Spannstellung mit einem hoch stehende Handbremshebel (14), der schräg oder senkrecht steht.

Die Bremseinrichtung (4) kann ferner eine Auflaufeinrichtung (5) beinhalten, die z.B. aus einer mit der Anhängerkupplung (3) verbundenen Schubstange (9) besteht, die an einem deichselfesten Gehäuse (8) längsbeweglich gelagert und geführt ist und am rückwärtigen Ende auf einen Umlenkhebel (10) einwirkt, der seinerseits mit dem Bremsgestänge (11) über ein schwenkbare Anschlussteil (12) verbunden ist. Zwischen Gehäuse (8) und Anhängerkupplung (3) kann die Schubstange (9) von einem Faltenbalg dichtend umgeben sein. Beim Auflaufen des Fahrzeuganhängers (1) auf das Zugfahrzeug wird die Schubstange (9) nach hinten eingeschoben, wodurch der Umlenkhebel (10) nach hinten geschwenkt wird und über das Bremsgestänge (11) die Radbremsen ansieht.

Die Bremseinrichtung (4) und die Auflaufeinrichtung (5) können ferner einen Kraftspeicher (7) aufweisen, der i.B. als Federspeicher ausgebildet ist und der an einem nach unten abstehenden Gehäuseansatz (32) über ein endseitige Drehlager (33) schwenkbar gehalten ist. Der Kraftspeicher (7) wird über eine Stellstange (19) durch den Handbremshebel (14) mittels eines Betätigers (15) bedient. Wenn die Radbremsen mit der Handbremseinrichtung (6) angezogen werden und der Handbremshebel (14) hochgeschwenkt wird, unterstützt der Kraftspeicher (7) die Handbewegung und Handkraft. Am Ende der Spannbewegung nimmt der Handbremshebel (14) eine Schrägstellung (nicht dargestellt) ein, die zwischen den in Figur 1 und 2 gezeigten Hebelstellungen liegt. Falls der Fahrzeuganhänger (1) sich aus der Handbremsstellung rückwärts bewegt und die Bremsbacken der Radbremse unter Einwirkung einer Rückfahrautomatik ausweichen, kann sich der Kraftspeicher (7) entspannen, wobei er mit der Stellstange (19) den Handbremshebel (14) weiter in die in Figur 2 gezeigte aufrechte Endstellung oder Spannstellung bewegt und dabei das Bremsgestänge (11) unter Entwicklung einer zusätzlichen Zuspannkraft anzieht.

Beim Lösen der Handbremseinrichtung (6) wird der Handbremshebel (14) zurück in die in Figur 1 dargestellte Lösestellung geschwenkt. Hierbei wird der Kraftspeicher (7) wieder gespannt und die Stellstange (19) herausgezogen. Der Kraftspeicher (7) bewegt sich bei seiner Schwenkbewegung über eine Totpunktstellung.

Der Handbremshebel (14) hat eine variable Länge und besitzt ein teleskopierbares Griffteil (21) mit einer veränderlichen Ausfahrlänge Δl. Die Teleskopierbarkeit kann in beliebig geeigneter Weise konstruktiv ausgebildet sein.

In der gezeigten Ausführungsform ist der Handbremshebel (14) mehrteilig ausgebildet und besteht aus einem Griffteil (21), welches auf einem Grundkörper längsbeweglich gelagert und geführt ist. Das Griffteil (21) kann z.B. aus dem eigentlichen Handgriff (22) am vorderen Ende und einem nach hinten anschließenden Führungsteil (23) bestehen. Der Handgriff (22) und das Führungsteil (23) sind z.B. hülsenförmig ausgebildet und gleitfähig auf einem Griffträger (24) des Grundkörpers (20) gelagert. Das Griffteil (21) kann z.B. eine zylindrische und gerade Rohrform aufweisen, wobei der angepasste Griffträgers (24) eine gerade und zylindrische Stangen- oder Rohrform aufweist, Die Kinematik kann alternativ umgekehrt sein. Die besagten Teile müssen auch nicht unbedingt gerade sein.

Der Grundkörper (20) weist ferner ein abgewinkeltes Hebelende (25) mit einer endseitigen Anschlussplatte (26) zur Aufnahme des Schwenklagers (13) auf. Über das schwenklager (13) sind der Handbremshebel (14) und der Umlenkhebel (10) gleichachsig gelagert. Zwischen dem Handbremshebel (14) und dem Umlenkhebel (10) besteht eine Verbindung, vorzugsweise eine einseitig wirkende Schleppverbindung. Bei einer Betätigung des Handbremshebel (14) wird der Umlenkhebel (10) mitgenommen, wobei über das mit dem rückwärtigen Ende des Umlenkhebels (10) verbundene Anschlussteil (12) das Bremsgestänge (11) und die Radbremsen angesogen werden. In Lösestellung gemäß Figur 1 kann sich durch die Einseitigkeit der Schleppverbindung der Umlenkhebel (10) unabhängig vom Handbremshebel (14) zur Auflaufbremsung bewegen.

Für das Griffteil (21) ist eine Zwangsführung (27) vorgegehen, welche die Ausfahrlänge Δl des Griffteils (21) und damit die wirksame Handbremshebellänge sowie den Abstand des Griffteils (21) vom Schwenklager (13) bestimmt. Vorzugsweise steuert die Zwangsführung (27) die Ausfahrlänge Δl in Abhängigkeit von der Drehstellung des Handbremshebels (14). Aus ergonomischen Gründen ist es hierbei verteilhaft, wenn die zwangsführung (27) derart ausgelegt ist, dass die Ausfahrlänge Δl in der in Figur 2 gezeigten Betätigungsstellung des Handbremshebels (14) maximal und in der in Figur 1 dargestellten Lösestellung minimal ist. In der Betätigungsstellung hat der Handgriff (22) einen großen und ggf. maximale Abstand vom Schwenklager (13), so dass das über die Handkraft aufbringbare Moment zum Spannen des eventuell vorhandenen Kraftspeichers (7) groß und ggf. maximal sein kann.

Dies ist insbesondere zum Lösen des Handbremshebels (14) aus der in Figur 2 gezeigten im wesentlichen senkrechten Betätigungsstellung nützlich. Der mit einer Totpunktlage arbeitende Kraftspeicher (7) muss gespannt werden, wenn der Handbremshebel (14) in die Lösestellung abgeschwenkt wird. Für diese zusätzliche Spannkraft ist ein hohes Betätigungsmoment vorteilhaft. Hierfür ist außerdem die nachfolgend erläuterte Ausbildung und Kinematik des Betätigers (15) von Vorteil.

Die Zwangsführung (27) ist z.B. als Lenkergetriebe (28) ausgebildet. Dieses kann in beliebig geeigneter Weise ausgestaltet sein und ist z.B. an einem Ende mit dem Griffteil (21) verbunden und am anderen Ende relativ ortsfest am Gehäuse (8) oder einem anderen deichselfesten Teil abgestützt. Über ein Lenkergetriebe (29) lässt sich besonders gut die Ausfahrlänge Δl in Abhängigkeit von der Drehstellung des Handbremshebels (14) steuern.

Figur 1 und 2 zeigen eine besonders einfache und praktische Ausführungsform des Lenkergetriebes (28), welches einen vorzugsweise geraden Führungslenker (29) aufweist, der über ein Hebellager (31) am vorderen Ende drehbar mit dem Griffteil (21) und über ein anderes Hebellager (30) am rückwärtigen Ende drehbar mit dem Gehäuse (8) verbunden ist. Das Hebellager (30) ist dabei am Gehäuse (8) mit Abstand oberhalb und in Fahrtrichtung hinter dem Schwenklager (13) angeordnet. Bei einer Schwenkbewegung des Handbremshebels (14) dreht der Führungslenker (29) mit. Das Hebellager (31) und das darüber angebundene Griffteil (21) führt dabei eine Drehbewegung um das andere Hebellager (30) aus mit einem Radius, der kleiner als die Entfernung des Drehlagers (31) vom Schwenklager (13) ist, Hierdurch wird beim Hochschwenken des Handbremshebels (14) das teleskopierbare Griffteil (21) ausgeschoben und die Ausfahrlänge Δl. sukzessive bis zu dem in Figur 2 gezeigten Maximalbereich vergrößert. Die Ausfahrlänge Δl ist in Figur 2 anhang des Abstands zwischen dem vorderen Handgriffende gegenüber dem Vorderende des Griffträgers (24) dargestellt. In der Lösestellung von Figur 1 liegen diese beiden Enden eng benachbart zueinander.

Der Handbremshebel (14) weist am rückwärtigen Ende den eingangs erwähnen Betätiger (15) für den Kraftspeicher (7) auf. Der Betätiger (15) besteht aus einem gebogenen Schwenkhebel (16), dessen Hebelarme z.B. ca. in einem 90°-Winkel zueinander aufgerichtet sind Durch die Winkelform kann der Schwenkhebel (16) in der Lösestellung von Figur 1 das Schwenklager (13) an der Unterseite umgreifen. Der Schwenkhebel (16) ist am einen Hebelende über ein Hebellager (17) am Grundkörper (20) und insbesondere an dessen Anschlußplatte (26) angelenkt. In Lösestellung befindet sich das Hebellager (17) etwas oberhalb und mit seitlichem Abstand hinter dem Schwenklager (13). Am anderen Ende des Schwenkhebels (16) ist ein Anschluß (18) zur Verbindung mit der Stellstange (19) angeordnet. In der Lösestellung befindet sich das Schwenklager (13) zwischen dem Hebellager (17) und dem Anschluss (18).

Beim Betätigen und Hochschwenken des Handbremshebels (14) entspannt sich der Kraftspeicher (7) und unterstützt die Handkraft. Die Stellstange (19) bewegt sich in das Gehäuse des Kraftspeichers (7) hinein und in Richtung zur Anhängerkupplung (3), wobei sie den Schwenkhebel (16) über den Anschluss (18) mitnimmt. Vom Schwenkhebel (16) wird über das Hebellager (17) der Handbremshebel (14) mitgenommen und kraftunterstützend gedreht . Wie Figur 1 und 2 verdeutlichen, wird hierbei der Kraftspeicher (7) um sein am vorderen Ende befindliches Drehlager (33) geschwenkt, wobei er eine Totpunktlage überschreitet. Die Totpunktlage sichert trotz der Gegenkraft des Kraftspeichers (7) die Lösestellung des Handbremshebels (14) gemäß Figur 1.

Abwandlungen der gezeigten und beschriebenen Ausführungsform sind in verschiedener Weise möglich. Die Zwangsführung (27) kann z.B. aus einer Kulissen- oder Nockenführung bestehen. Ferner kann z.B. das teleskopierbare Griffteil unter der permanenten Einwirkung einer Feder oder eines anderen Kraftelements stehen, welche das Griffteil unter Vergrößerung der Ausfahrlänge Δ1 nach außen zu schieben versucht. Ein gehäusefest gehaltenes biegeelastisches und zugfestes Seil oder dgl. ist an Stelle des Führungslenkers angeordnet und begrenzt die Ausfahrlänge Δ1 in Abhängigkeit von der Drehstellung des Handbremshebels.

Ferner kann die Teleskopierbarkeit des Griffteils (21) anders gestaltet sein. Insbesondere kann das Griffteil (21) ein in sich über ein oder mehrere Stufen teleskopierbares Teil sein, dessen rückwärtiges Ende mit dem Grundkörper fest verbunden sein kann. Die gezeigte Anordnung hat allerdings den Vorteil einer größeren und besseren Führungslänge, wobei auch der Handgriff (22) über die Gleithülse (23) und deren Länge von der Zwangsführung (27) in ergonomisch günstiger Weise freigestellt ist. Variabel ist auch die sonstige Ausgestaltung und Anordnung des Handbremshebels (14). Die gezeigte Ausführung mit der rohr- oder stangenförmigen Gestaltung des Griffträgers (24) und des damit z.B. einstückig verbundenen abgewinkelten Hebelendes (25) und der dort angebundenen Anschlussplatte (26) stellt eine besonders einfache und kostengünstige Ausführungsform dar. Der Grundkörper (20) lässt sich hierbei auch über eine aufgesteckte Blende oder ein Gehäuse umgeben und kaschieren. Ferner kann die Auflaufeinrichtung (5) anders ausgebildet sein, entfallen oder durch eine andere Betriebsbremse ersetzt werden. Auch der Kraftspeicher (7) sowie der Betätiger (15) können in Ausbildung oder Anordnung variieren oder entfallen.

### BEZUGSZEICHENLISTE

- 1: Fahrzeuganhänger
- 2: Deichsel
- 3: Anhängerkupplung
- 4: Bremseinrichtung
- 5: Auflaufeinrichtung
- 6: Handbremseinrichtung
- 7: Kraftspeicher, Federspeicher
- 8: Gehäuse
- 9: Schubstange
- 10: Umlenkhebel
- 11: Bremsgestänge
- 12: Anschlussteil
- 13: Schwenklager, Schwenkachse
- 14: Handbremshebel
- 15: Betätiger Kraftspeicher
- 16: Schwenkhebel
- 17: Hebellager, Hebelachse
- 18: Anschluss
- 19: Stellstange
- 20: Grundkörper
- 21: Griffteil
- 22: Handgriff
- 23: Führungsteil, Gleithülse
- 24: Griffträger
- 25: Hebelende
- 26: Anschlussplatte
- 27: Zwangsführung
- 28: Lenkergetriebe
- 29: Führungslenker
- 30: Hebellager an Gehäuse
- 31: Hebellager an Griffteil
- 32: Gehäuseansatz
- 33: Drehlager

## Patentansprüche

1. Handbremshebel für Bremseinrichtungen (4) von Fahrzeuganhängern (1), wobei der schwenkbar gelagerte und zwischen einer Lösestellung und einer Betätigungsstellung drehbare Handbremshebel (14) eine variable Länge und ein teleskopierbares Griffteil (21) mit einer veränderlichen Ausfahrlänge Δl aufweist, **dadurch gekennzeichnet, dass** das Griffteil (21) eine die Ausfahrlänge Δl bestimmende Zwangsführung (27) aufweist.

2. Handbremshebel nach Anspruch 1, **dadurch gekennzeichnet, dass** die Zwangsführung (27) die Ausfahrlänge Δl in Abhängigkeit von der Drehstellung des Handbremshebels (14) steuert.

3. Handbremshebel nach Anspruch 1 oder 2, **dadurch gekennzeichnet, dass** die Zwangsführung (27) derart ausgelegt ist, dass die Ausfahrlänge Δl in der Betätigungsstellung des Handbremshebels (14) maximal und in der Lösestellung minimal ist.

4. Handbremshebel nach Anspruch 1, 2 oder 3, **dadurch gekennzeichnet, dass** die Zwangsführung (27) als Lenkergetriebe (28) ausgebildet ist.

5. Handbremshebel nach Anspruch 4,
**dadurch gekennzeichnet, dass** das Lenkergetriebe (28) am einen Ende mit dem Griffteil (21) verbunden und am anderen Ende relativ ortsfest abgestützt ist.

6. Handbremshebel nach Anspruch 4 oder 5, **dadurch gekennzeichnet, dass** das Lenkergetriebe (28) einen Führungslenker (29) aufweist, der über ein Hebellager (31) drehbar mit dem Griffteil (21) und über ein Hebellager (30) drehbar mit einem Gehäuse (8) der Bremseinrichtung (4) verbunden ist.

7. Handbremshebel nach Anspruch 6, **dadurch gekennzeichnet, dass** die Hebellager (30,31) an den Enden des geraden Führungslenkers (29) angeordnet und am Gehäuse (8) mit Abstand über und hinter dem Schwenklager (13) des Handbremshebels (14) angeordnet sind.

8. Handbremshebel nach einem der vorhergehenden Ansprüche, **dadurch gekennzeichnet, dass** der Handbremshebel (14) einen Grundkörper (20) aufweist, an dem das Griffteil (21) längsbeweglich gelagert ist.

9. Handbremshebel nach einem der vorhergehenden Ansprüche, **dadurch gekennzeichnet, dass** das Griffteil (21) einen Handgriff (22) und ein Führungsteil (23) aufweist, an dessen Endbereich das Hebellager (31) angeordnet ist.

10. Handbremshebel nach einem der vorhergehenden Ansprüche, **dadurch gekennzeichnet, dass** der Handbremshebels (14) einen Betätiger (15) für einen Kraftspeicher (7) aufweist.

11. Handbremshebel nach einem der vorhergehenden Ansprüche, **dadurch gekennzeichnet, dass** der Betätiger (15) einen am Handbremshebel (14) gelagerten Schwenkhebel (16) mit einem Anschluss (18) zur Verbindung mit einer Stellstange (19) des Kraftspeichers (7) aufweist, wobei der Schwenkhebel (16) eine abgewinkelte Form aufweist und an einem Ende über ein Schwenklager (17) mit dem Hebelende (25) verbunden ist und am anderen Ende den Anschluss (18) trägt.

12. Bremseinrichtung für Fahrzeuganhänger (1) mit einer Handbremseinrichtung (6) und einem schwenkbar gelagerten und zwischen einer Lösestellung und einer Betätigungsstellung drehbaren Handbremshebel (14), der eine variable Länge und ein teleskopierbares Griffteil (21) mit einer veränderlichen Ausfahrlänge Δ1 aufweist, **dadurch gekennzeichnet, dass** das Griff teil (21) eine die Ausfahrlänge Δ1 bestimmende Zwangsführung (27) aufweist.

13. Bremseinrichtung nach Anspruch 12, **dadurch gekennzeichnet, dass** der Handbremshebel (14) nach einem der Ansprüche 2 bis 11 ausgebildet ist.

14. Bremseinrichtung nach Anspruch 12 oder 13, **dadurch gekennzeichnet, dass** die Bremseinrichtung (4) eine Auflaufeinrichtung (5) mit einem Umlenkhebel (10) aufweist, der gleichachsig mit dem Handbremshebel (14) gelagert und mit diesem in einer Schleppverbindung steht.

15. Bremseinrichtung nach Anspruch 12, 13 oder 14, **dadurch gekennzeichnet, dass** die Bremseinrichtung (4) einen mit dem Handbremshebel (14) verbundenen Kraftspeicher (7) aufweist.

## Claims

1. Handbrake lever for brake devices (4) of vehicle trailers (1), the handbrake lever (14) which is mounted pivotably and can be rotated between a release position and an actuating position having a variable length and a telescopic grip part (21) with a variable extending length Δl, **characterized in that** the grip part (21) has a positive guidance means (27) determining the extending length Δl.

2. Handbrake lever according to Claim 1, **characterized in that** the positive guidance means (27) controls the extending length Δl as a function of the rotational position of the handbrake lever (14).

3. Handbrake lever according to Claim 1 or 2, **characterized in that** the positive guidance means (27) is so designed that the extending length Δl is at a maximum in the actuating position of the handbrake lever (14) and at a minimum in the release position.

4. Handbrake lever according to Claim 1, 2 or 3, **characterized in that** the positive guidance means (27) is configured as a link mechanism (28).

5. Handbrake lever according to Claim 4, **characterized in that** the link mechanism (28) is connected at one end to the grip part (21) and at the other end is supported in a relatively fixed position.

6. Handbrake lever according to Claim 4 or 5, **characterized in that** the link mechanism (28) has a control link (29) which is connected rotatably to the grip part (21) via a lever bearing (31) and is connected rotatably to a housing (8) of the brake device (4) via a lever bearing (30).

7. Handbrake lever according to Claim 6, **characterized in that** the lever bearings (30, 31) are arranged at the ends of the straight control link (29) and are arranged on the housing (8) at a distance above and behind the pivot bearing (13) of the handbrake lever (14).

8. Handbrake lever according to any one of the preceding claims, **characterized in that** the handbrake lever (14) has a main body (20) on which the grip part (21) is mounted in a longitudinally displaceable manner.

9. Handbrake lever according to any one of the preceding claims, **characterized in that** the grip part (21) has a handgrip (22) and a guide part (23) in the end region of which the lever bearing (31) is arranged.

10. Handbrake lever according to any one of the preceding claims, **characterized in that** the handbrake lever (14) has an actuator (15) for a force accumulator (7).

11. Handbrake lever according to any one of the preceding claims, **characterized in that** the actuator (15) has a swiveling lever (16) mounted on the handbrake lever (14), which swiveling lever (16) has a connection (18) for connection to an actuating rod (19) of the force accumulator (7), the swiveling lever (16) having an angled shape and is connected at one end to the lever end (25) via a pivot bearing (17) and carries at the other end the connection (18).

12. Brake device for vehicle trailers (1) with a handbrake device (6) and a handbrake lever (14) which is mounted pivotably and can be rotated between a release position and an actuating position which has a variable length and a telescopic grip part (21) with a variable extending length Δ1, **characterized in that** the grip part (21) has a positive guidance means (27) determining the extending length Δ1.

13. Brake device according to Claim 12, **characterized in that** the handbrake lever (14) is configured according to any one of Claims 2 to 11.

14. Brake device according to Claim 12 or 13, **characterized in that** the brake device (4) has an overrun device (5) with a reversing lever (10) which is mounted coaxially with the handbrake lever (14) and is connected via a pull-connection thereto.

15. Brake device according to Claim 12, 13 or 14, **characterized in that** the brake device (4) has a force accumulator (7) connected to the handbrake lever (14).

## Revendications

1. Levier de frein à main pour des dispositifs de freinage (4) de remorques de véhicules (1), dans lequel le levier de frein à main (14) monté de manière pivotante et pouvant tourner entre une position desserrée et une position d'actionnement présente une longueur variable et une partie de préhension télescopable (21) avec une longueur de déploiement variable Δl, **caractérisé en ce que** la partie de préhension (21) présente un guidage forcé (27) déterminant la longueur de déploiement Δl.

2. Levier de frein à main selon la revendication 1, **caractérisé en ce que** le guidage forcé (27) commande la longueur de déploiement Δl en fonction de la position de rotation du levier de frein à main (14).

3. Levier de frein à main selon la revendication 1 ou 2, **caractérisé en ce que** le guidage forcé (27) est conçu de telle sorte que la longueur de déploiement Δl soit maximale dans la position d'actionnement du levier de frein à main (14) et soit minimale dans la position desserrée.

4. Levier de frein à main selon la revendication 1, 2 ou 3, **caractérisé en ce que** le guidage forcé (27) est réalisé sous forme de transmission à bras oscillant (28).

5. Levier de frein à main selon la revendication 4, **caractérisé en ce que** la transmission à bras oscillant (28) est connectée à une extrémité à la partie de préhension (21) et est supportée de manière relativement fixe à l'autre extrémité.

6. Levier de frein à main selon la revendication 4 ou 5, **caractérisé en ce que** la transmission à bras oscillant (28) présente un bras oscillant de guidage (29) qui est connectée de manière rotative par le biais d'un palier de levier (31) à la partie de préhension (21) et de manière rotative par le biais d'un palier de levier (30) à un boîtier (8) du dispositif de freinage (4).

7. Levier de frein à main selon la revendication 6, **caractérisé en ce que** les paliers de levier (30, 31) sont disposés sur les extrémités du bras oscillant de guidage droit (29) et sur le boîtier (8) à distance au-dessus et derrière le palier pivotant (13) du levier de frein à main (14).

8. Levier de frein à main selon l'une quelconque des revendications précédentes, **caractérisé en ce que** le levier de frein à main (14) présente un corps de base (20) sur lequel la partie de préhension (21) est montée de manière déplaçable longitudinalement.

9. Levier de frein à main selon l'une quelconque des revendications précédentes, **caractérisé en ce que** la partie de préhension (21) présente une poignée (22) et une partie de guidage (23), sur la région d'extrémité de laquelle est disposé le palier de levier (31).

10. Levier de frein à main selon l'une quelconque des revendications précédentes, **caractérisé en ce que** le levier de frein à main (14) présente un actionneur (15) pour un accumulateur de force (7).

11. Levier de frein à main selon l'une quelconque des revendications précédentes, **caractérisé en ce que** l'actionneur (15) présente un levier pivotant (16) monté sur le levier de frein à main (14), avec un raccordement (18) pour la connexion à une tige de commande (19) de l'accumulateur de force (7), le levier pivotant (16) présentant une forme coudée et étant connecté à une extrémité par le biais d'un palier pivotant (17) à l'extrémité de levier (25) et portant le raccordement (18) à l'autre extrémité.

12. Dispositif de freinage pour remorques de véhicules (1), comprenant un dispositif de frein à main (6) et un levier de frein à main (14) monté de manière pivotante et pouvant tourner entre une position desserrée et une position d'actionnement, qui présente une longueur variable et une partie de préhension télescopable (21) avec une longueur de déploiement variable Δ1, **caractérisé en ce que** la partie de préhension (21) présente un guidage forcé (27) déterminant la longueur de déploiement Δ1.

13. Dispositif de freinage selon la revendication 12, **caractérisé en ce que** le levier de frein à main (14) est réalisé selon l'une quelconque des revendications 2 à 11.

14. Dispositif de freinage selon la revendication 12 ou 13, **caractérisé en ce que** le dispositif de freinage (4) présente un dispositif de montée (5) avec un levier déflecteur (10), qui est monté sur le même axe que le levier de frein à main (14) et qui est en liaison d'entraînement avec celui-ci.

15. Dispositif de freinage selon la revendication 12, 13 ou 14, **caractérisé en ce que** le dispositif de freinage (4) présente un accumulateur de force (7) connecté au levier de frein à main (14).
